# FASCICULE DE BREVET EUROPEEN

(11) **EP 1 812 627 B1**
(45) Date de publication et mention de la délivrance du brevet: **16.05.2012**
(21) Numéro de dépôt: 05819176.8
(22) Date de dépôt: 17.11.2005
(51) Int. Cl.: D01D 5/08, D01D 5/30

(54) **PROCEDE ET DISPOSITIF DE PRODUCTION D'UN FIL COMPOSITE**
VERFAHREN UND VORRICHTUNG ZUR HERSTELLUNG EINES VERBUNDGARNS
METHOD AND DEVICE FOR PRODUCING A COMPOSITE YARN

(30) Priorité: 17.11.2004 FR 0452658
(43) Date de publication de la demande: 01.08.2007
(73) Titulaire: Saint Gobain Vetrotex France S.A., 73000 Chambéry (FR)
(72) Inventeur: LOUBINOUX, Dominique, F-73290 LA MOTTE SERVOLEX (FR); GAS, Bruno, F-33600 Pessac (FR)
(74) Mandataire: Joly, Jean-Jacques
(86) Numéro de dépôt international: PCT/FR2005/050960
(87) Numéro de publication internationale: WO 2006/054025

(56) Documents cités:
- EP-A- 0 616 055
- PATENT ABSTRACTS OF JAPAN vol. 007, no. 122 (C-168), 26 mai 1983 (1983-05-26) & JP 58 041910 A (KANEBO KK; others: 02), 11 mars 1983 (1983-03-11)
- PATENT ABSTRACTS OF JAPAN vol. 007, no. 108 (C-165), 11 mai 1983 (1983-05-11) & JP 58 031111 A (KANEBO KK; others: 01), 23 février 1983 (1983-02-23)

## Description

L'invention concerne un procédé et un dispositif de fabrication d'un fil composite formé par l'association d'une pluralité de filaments continus de verre et des filaments continus de matière organique thermoplastique entremêlés.

On connaît déjà des procédés permettant de produire un fil composite comprenant de tels filaments de verre et de matière organique thermoplastique.

Dans EP-A-0 367 661, on décrit un procédé mettant en oeuvre une première installation comprenant une filière contenant du verre à l'état fondu, à partir de laquelle sont étirés des filaments continus de verre, et une deuxième installation comprenant une tête de filage, alimentée sous pression par une matière organique thermoplastique qui délivre des filaments continus. Lors de l'assemblage, les deux types de filaments peuvent être sous la forme de nappes, ou de nappe et de fil.

Ce procédé permet d'obtenir un fil composite dans lequel les filaments thermoplastiques entourent les filaments de verre qui sont ainsi protégés des effets de l'abrasion dus aux frottements sur les organes de guidage, d'assemblage et de collecte dudit fil.

Dans EP-A-0 505 275, on propose un procédé pour la fabrication d'un fil composite semblable à celui décrit précédemment dans EP-A-0 367 661 qui utilise au moins une tête de filage habituellement utilisée dans le domaine de l'industrie des fibres synthétiques.

Ce document préconise d'étirer les filaments organiques en une ou plusieurs nappes délimitant, en partie ou en totalité, une zone de forme conique ou pyramidale comprenant un secteur ouvert par lequel est introduit le fil de verre.

Le document EP-A-0 599 695 décrit la fabrication d'un fil composite de filaments de verre et de filaments thermoplastiques co-mêlés qui consiste à associer un faisceau ou une nappe de filaments continus de verre issus d'une filière et une nappe de filaments continus thermoplastiques produits à partir d'une tête de filage, et lesdits filaments thermoplastiques ayant lors de leur pénétration dans la nappe ou le faisceau de verre une vitesse d'étirage supérieure à la vitesse des filaments de verre.

L'amélioration consiste ici à surétirer les filaments thermoplastiques pour compenser leur retrait, ce qui permet d'obtenir un fil composite sans ondulation lors de sa formation et stable dans le temps.

Dans EP-A-0 616 055, il est encore proposé un procédé de production d'un fil composite verre/thermoplastique par co-mêlage d'une nappe de filaments thermoplastiques et d'un faisceau ou une nappe de filaments de verre, dans lequel les filaments thermoplastiques sont, en amont du point de convergence, chauffés à une température supérieure à leur température de relaxation, étirés puis refroidis.

Enfin, WO-A-02/31231 décrit la fabrication d'un fil composite verre/thermoplastique de masse linéique élevée. Selon ce procédé, on divise les filaments de verre et les filaments thermoplastiques en plusieurs nappes, on mêle au moins une nappe thermoplastique à chaque nappe de verre et on rassemble les filaments en au moins un fil composite. Ce procédé contribue à améliorer le co-mêlage des filaments.

Le fil composite obtenu avec les procédés qui viennent d'être décrits a les propriétés recherchées pour permettre la réalisation de produits composites à matrice thermoplastique renforcée par des fibres. En particulier, ses propriétés mécaniques ont un niveau de performance satisfaisant qui s'apprécie par la bonne qualité de la liaison entre la matrice thermoplastique et la matière qui la renforce.

Néanmoins, certaines applications nécessitent que le produit composite soit doté de propriétés supplémentaires, par exemple la capacité à résister au feu et/ou aux rayonnements ultraviolets et/ou à la chaleur, la possibilité de pouvoir être coloré et l'aptitude à conduire le courant électrique.

Traditionnellement, on obtient les propriétés visées en traitant le fil composite ou les assemblages de ces fils (grilles, mats, tissus, tricots, tresses) avec des composés appropriés tels que des ignifugeants, des anti-oxydants et des stabilisants thermiques, des colorants et des charges conductrices pour remplir les fonctions précitées. La manière d'opérer le traitement est connue et peut être notamment un poudrage, une pulvérisation, une immersion dans un bain de matière liquide (solution, dispersion, émulsion) ou fondue, ou une enduction. Les traitements sont généralement effectués par l'utilisateur final et nécessitent des installations particulières coûteuses, encombrantes et générant des nuisances (poussières, humidité, ...) qui ont entre autres inconvénients celui de traiter le fil seulement en surface.

Or, il s'avère intéressant de pouvoir traiter le fil composite « à coeur » en incorporant les composés aptes à remplir les fonctions précitées au niveau des filaments constitutifs du fil, plus particulièrement sur ou dans la matière thermoplastique à l'état filamentaire.

Cette tâche est rendue difficile par le fait que lesdits composés ne sont pour la plupart pas « filables » et que par conséquent ils ne peuvent pas être introduits sous la forme de filaments dans le fil composite.

En outre, lesdits composés sont le plus souvent peu ou pas compatibles chimiquement avec la matière thermoplastique des filaments. Or, il est connu que, d'une manière générale, le dépôt de tels composés sur des filaments en cours de constitution ou leur introduction dans la matière thermoplastique avant le filage, par exemple dans l'extrudeuse alimentant la tête de filage, perturbe la bonne marche du filage, voire le rend impossible.

Par ailleurs, la qualité du filage des filaments thermoplastiques doit être la plus constante possible, notamment au regard du diamètre des filaments, étant donné que ceux-ci sont amenés à être associés aux filaments de verre et que par conséquent l'association ne doit pas non plus perturber le fibrage du verre.

La présente invention a pour objet un procédé de fabrication d'un fil composite qui permet d'incorporer des composés non filables au niveau filamentaire et de doter le fil composite de propriétés spécifiques « à coeur ».

Le problème posé par l'introduction de composés non filables dans le fil composite est résolu par un procédé de fabrication d'un fil composite formé par l'association de filaments continus de verre issus d'au moins une filière et de filaments continus de matière thermoplastique issus d'au moins une tête de filage qui sont étirés et co-mêlés sous la forme d'une nappe à un faisceau ou une nappe de filaments de verre, dans lequel les filaments thermoplastiques sont obtenus par co-extrusion d'une matière organique thermoplastique principale et d'une matière organique thermoplastique secondaire contenant au moins un composé non filable.

Par « composé non filable », on entend ici un composé qui, n'est pas apte à donner des filaments dans les conditions classiques des procédés opérant par extrusion-filage.

Par « matière organique thermoplastique principale » on entend la matière organique thermoplastique majoritaire qui constitue en quelque sorte l'âme des filaments thermoplastiques et sert de support au(x) composé(s) non filable(s) en mélange avec la matière thermoplastique minoritaire comme explicité ci-après. Par souci de simplification, la matière organique thermoplastique principale est désignée ci-après « matière principale ».

Par « matière organique thermoplastique secondaire » on entend le mélange de la matière organique thermoplastique minoritaire et d'au moins un composé non filable en tant que tel. La matière organique thermoplastique secondaire est désignée ci-après « matière secondaire ».

La co-extrusion permet à la matière secondaire en fusion d'être incorporée à la matière principale, également à l'état fondu, et d'être transportée par le filament d'âme quand celui-ci est étiré.

Selon un premier mode de réalisation, préféré, la co-extrusion est effectuée dans des conditions telles que la matière secondaire est répartie sur tout ou partie de la surface de la matière principale servant d'âme. La matière secondaire peut avoir une répartition homogène ou être distribuée aléatoirement sur la matière principale, et se présenter, par exemple sous la forme d'un revêtement, continu ou discontinu, ou d'amas (plaques, gouttes, ...). La forme que peut adopter la matière secondaire n'est pas critique, l'essentiel étant qu'elle soit apte à servir de vecteur pour le ou les composés non filables. Le(s) composé(s) non filable(s), notamment lorsqu'il(s) est (sont) sous forme de particules, peut (peuvent) être entièrement inclus dans la matière secondaire ou partiellement, l'autre partie se situant dans la matière principale et/ou étant libre en surface.

Selon un autre mode de réalisation, la co-extrusion est réalisée dans des conditions telles que la matière secondaire est incluse dans la matière principale. La répartition de la matière secondaire au sein de chaque filament thermoplastique dépend de la tête de filage utilisée comme il sera explicité plus loin. Cette manière d'opérer permet d'introduire le(s) composé(s) non filable(s) dans le filament thermoplastique. Le filage dans ces conditions est cependant plus délicat que précédemment : du fait de l'extrusion imparfaite de la matière secondaire due à la présence de composé(s) non filable(s), les filaments présentent un diamètre qui varie au cours du temps, donnant au final un fil de masse linéique plus irrégulier.

La co-extrusion permet d'introduire des composés intrinsèquement non filables sur ou dans les filaments thermoplastiques. Après que les filaments thermoplastiques ainsi produits sont associés aux filaments de verre, le fil composite présente « à coeur » des fonctions spécifiques liées à la nature des composés non filables qu'il contient.

Les matières organiques thermoplastiques de la matière principale et de la matière secondaire doivent être au moins partiellement compatibles chimiquement afin d'éviter les problèmes de délamination de ces matières.

La matière principale est choisie parmi les polyoléfines telles que le polyéthylène et le polypropylène, les polyesters tels que le polyéthylène téréphtalate et le polybutylène téréphtalate, les polyamides tels que le polyamide-6, le polyamide-6,6 et le polyamide-12, le polysulfure de phénylène et les polyuréthanes. De préférence, on utilise le polypropylène.

La matière organique thermoplastique de la matière secondaire peut être choisie parmi les matières organiques thermoplastiques citées dans le paragraphe précédent pour la matière principale. Elle peut être de nature identique ou différente. De préférence, les matières principale et secondaire sont de même nature.

Les composés non filables peuvent être :
- des charges conductrices de la chaleur ou de l'électricité, par exemple des particules métalliques ou de graphite,
- des charges minérales aptes à diminuer le retrait et augmenter la dureté des composites, par exemple sous forme de particules de carbonate de calcium, de carbonate de calcium et de magnésium, de silice, d'argiles notamment contenant des silicates tels que des aluminosilicates, en particulier sous forme de nanocharges lamellaires, et de sulfate de barium,
- des retardateurs de flamme, par exemple des composés halogénés ou non associés à de l'oxyde d'antimoine et des phosphates,
- des agents colorants, par exemple du noir de carbone,
- des agents collants, par exemple des polymères thermocollants,
- des stabilisants UV, par exemple des amines stériquement encombrées, ou des stabilisants thermiques, par exemple des composés phénoliques et des phosphites.

La quantité de matière principale représente au moins 50 %, de préférence 70 à 95 % du poids total des filaments thermoplastiques, le complément à 100 % étant représenté par la matière secondaire.

La teneur pondérale en composé(s) non filable(s) dans la matière secondaire est inférieure à 80 %, de préférence varie de 1 à 50 % et mieux encore varie de 10 à 30 %.

Dans le fil, la teneur en composé(s) non filable(s) varie en fonction de la nature chimique et des propriétés à conférer au fil composite et à apporter au matériau composite final obtenu à partir de ce fil. En général, la quantité de composé(s) non filable(s) représente 0,1 à 30 %, de préférence 0,5 à 15 % en poids de la matière thermoplastique. Au-delà de 30 %, l'aptitude au filage est fortement diminuée avec des risques importants de rupture des filaments thermoplastiques ou de casse des filaments de verre lors de l'association avec des filaments thermoplastiques présentant des irrégularités importantes, par exemple au niveau du diamètre ou de la répartition du (des) composé(s) non filable(s).

Grâce à l'invention, les composés non filables sont inclus dans le fil composite au niveau filamentaire et ne sont pas répartis uniquement à la surface du fil comme cela est déjà connu. L'incorporation des composés non filables dans le fil composite peut se faire en quantité importante sans que le filage des filaments thermoplastiques en soit perturbé.

Un autre avantage du procédé est de permettre le dépôt de composé(s) non filable(s) en quantité constante par un contrôle précis du débit ce qui est difficile à réaliser avec certains traitements tels que le poudrage et l'enduction.

Un autre avantage encore du procédé est d'être modulable et de permettre le changement du (des) composé(s) non filable(s) dans un temps très court puisqu'une seule alimentation dudit (desdits) composé(s) est nécessaire par tête de filage. Il est par conséquent aisé de purger le dispositif et de le faire fonctionner avec un nouveau mélange de la même matière secondaire, ou d'une autre, et d'un ou plusieurs autres composés non filables. En cas d'incident, la relance au niveau de la tête de filage est également plus facile.

L'invention propose également un dispositif permettant la mise en oeuvre de ce procédé.

Selon l'invention, pour permettre la fabrication du fil composite formé de filaments continus de verre et de filaments continus de matière organique thermoplastique, ce dispositif comprend d'une part une installation comprenant au moins une filière alimentée en verre fondu, dont la face inférieure comporte une multitude d'orifices, cette filière étant associée à un dispositif enducteur, et d'autre part une installation comprenant au moins une tête de filage adaptée à la co-extrusion alimentée sous pression par la matière principale fondue et par la matière secondaire également fondue, cette tête de filage comportant une multitude d'orifices et étant associée à des moyens d'étirage et de projection desdits filaments en vue de les mêler aux filaments de verre, enfin des moyens communs aux deux installations permettant l'assemblage et éventuellement le bobinage d'au moins un fil composite.

Lorsque le fil n'est pas collecté sous forme de bobine, le dispositif comprend un support de réception en mouvement, par exemple une bande transporteuse, sur lequel le fil est directement projeté après l'assemblage des filaments pour former un mat de fils continus.

Le dispositif peut encore comprendre un coupeur qui sectionne le fil avant sa projection sur le support de réception pour former un mat de fils coupés ou des granulés utilisables par exemple pour la réalisation de pièces par injection ou compression.

La filière alimentée en verre fondu comporte de préférence de 400 à 8000 orifices à partir desquels les filaments de verre sont étirés.

La tête de filage peut être choisie parmi les têtes de filage connues, en particulier pour la réalisation de fils textiles multicomposants. De préférence, la tête de filage comprend de 400 à 8000 orifices à partir desquels les matières principale et secondaire sont co-extrudées.

A la tête de filage sont associées deux extrudeuses servant à l'alimentation en matières organiques thermoplastiques fondues, l'une pour la matière principale et l'autre pour la matière secondaire.

La tête de filage comporte une plaque-filière munie d'une multiplicité d'orifices répartis de préférence sous la forme d'un anneau ou d'une série d'anneaux concentriques à partir desquels la matière principale et la matière secondaire sont co-extrudées pour former des filaments qui sont étirés avant d'être co-mêlés aux filaments de verre.

De façon préférée, la tête de filage a une géométrie interne permettant la distribution séparée de la matière principale et de la matière secondaire jusqu'à la plaque-filière. La tête de filage est ainsi adaptée pour permettre une répartition des matières de telle sorte que la matière principale s'écoule avec un flux majoritaire par rapport à l'ensemble des matières extrudées et serve de vecteur pour l'accrochage et le transport de la matière secondaire qui contient le(s) composé(s) non filable(s).

Le débit des matières est réglé de manière que le flux de la matière principale représente au moins 50 %, de préférence 70 à 95 % en poids de l'ensemble des matières entrant dans la tête de filage.

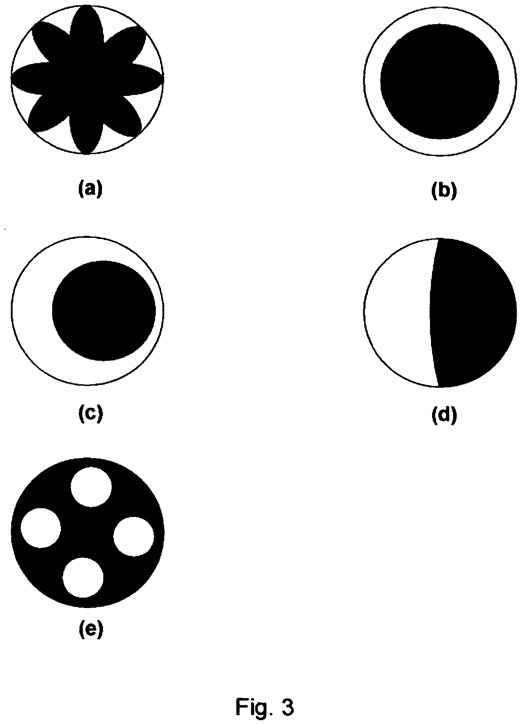

Les têtes de filage conformes à l'invention permettent d'avoir des filaments dans lesquels soit la matière secondaire se situe à la périphérie et la matière principale occupe le centre, par exemple du type en quartiers d'orange (figure 3 a) ou du type coeur-peau (« core-sheath » en anglais ; figure 3 b et c), soit les deux matières sont juxtaposées, par exemple du type côte à côte (« side-by-side » en anglais ; figure 3 d), soit encore la matière secondaire est incluse dans la matière principale, par exemple du type îles-mer (figure 3 e).

On préfère les têtes de filage qui permettent de répartir la matière secondaire à la périphérie de la matière principale ou de juxtaposer les matières principale et secondaire.

Les moyens permettant l'étirage des filaments thermoplastiques peuvent être par exemple un étireur du type à tambours décrit dans WO-A-98/01751 ou EP-A-0 599 695. Les filaments thermoplastiques sont étirés préalablement au co-mêlage avec les filaments de verre, ce qui permet de limiter leur retrait et d'éviter les ondulations dans le fil composite. Un tel fil s'avère avantageux pour réaliser des bobines à enroulement croisé.

Avantageusement, l'étireur est du type décrit dans EP-A-0 616 055. Il comprend au moins trois groupes de tambours, le premier groupe étant composé de tambours chauffés, le deuxième groupe comprend des tambours animés d'une vitesse supérieure à celle des précédents tambours et le troisième groupe comprend des tambours refroidis animés d'une vitesse identique à celle du dernier tambour du deuxième groupe. L'étape supplémentaire de chauffage/refroidissement permet d'améliorer la stabilité du fil dans le temps.

Le moyen permettant de projeter les filaments thermoplastiques peut être constitué par l'association de deux rouleaux : un premier rouleau-guide qui sert à orienter la nappe des filaments thermoplastiques vers un second rouleau où a lieu le co-mêlage avec les filaments de verre (voir EP-A-0 616 055) ou ce moyen peut consister en un système Venturi.

Ces moyens permettent de créer un entremêlement des filaments de verre d'une part et des filaments thermoplastiques d'autre part, ceux-ci arrivant avec des vitesses identiques. Les filaments co-mêlés sont ainsi linéaires. De préférence, la vitesse de projection des filaments thermoplastiques dans les filaments de verre est de l'ordre de 1000 mètres par minute.

Dans une variante, il est possible d'obtenir des fils composites dont les filaments de verre sont linéaires et les filaments thermoplastiques sont ondulés. Ce type de fil plus ou moins volumineux est recherché dans certaines applications textiles requérant un bon pouvoir « couvrant ». Pour cela, il suffit de modifier la vitesse de rotation des tambours de l'étireur de manière à conférer aux filaments thermoplastiques une vitesse supérieure à celle des filaments de verre avant qu'ils ne soient co-mêlés.

Les dispositifs décrits permettent la réalisation d'un fil composite de filaments de verre et de filaments thermoplastiques qui contiennent de la matière non filable répartie dans le fil, à la surface ou au sein des filaments thermoplastiques, contrairement aux fils de l'état de la technique où ladite matière se trouve uniquement à la surface du fil.

De tels dispositifs ont également pour avantages de présenter un encombrement réduit au niveau des têtes de filage, de pouvoir être installés sur une installation existante, le plus souvent comprenant plusieurs positions de fibrage du verre, sans nécessiter de modifications conséquentes et de permettre les opérations de maintenance et de nettoyage de la tête de filage sans perturber le fonctionnement du reste de la ligne de fabrication.

L'invention a encore pour objet le fil composite obtenu selon le procédé de l'invention.

Ce fil est de préférence constitué de 400 à 8000 filaments de verre et de 400 à 8000 filaments thermoplastiques. Les filaments de verre peuvent être constitués de tout type de verre connu, par exemple le verre AR (alcali-résistant), R, S ou E, ce dernier étant préféré.

La masse linéique du fil composite est supérieure ou égale à 100 tex et au plus égale à 10000 tex. De préférence la masse linéique est supérieure ou égale à 500 tex, et avantageusement supérieure ou égale à 1500 tex.

Ce fil composite verre/thermoplastique peut être utilisé pour réaliser des pièces en matériaux composites à matrice thermoplastique renforcée par des fils de verre par les techniques de pultrusion et d'enroulements filamentaires. Il peut également servir à la réalisation de produits intermédiaires tels que des mats, tissus, tricots et tresses, adaptés au moulage sous vide, au moulage à la vessie ou au diaphragme, et au moulage en compression. Le cas échéant, ces produits peuvent subir un traitement thermique visant à obtenir une fusion partielle de la matière thermoplastique pour consolider leur structure et permettre une meilleure manipulation.

D'autres détails et caractéristiques de l'invention apparaîtront à la lecture de la description détaillée ci-après, illustrée par les figures suivantes :
- la figure 1 représente une vue schématique d'une installation selon l'invention,
- la figure 2, a-c représente une vue en coupe longitudinale de têtes de filage conforme à l'invention au niveau d'un orifice de co-extrusion,
- la figure 3, a-e, représente une vue en coupe transversale des filaments thermoplastiques obtenus selon l'invention.

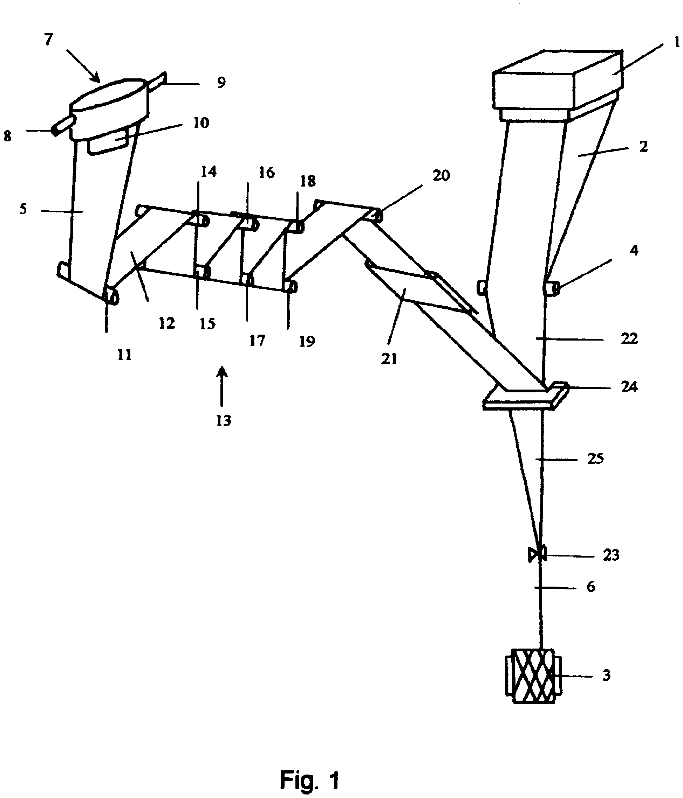

L'invention illustrée sur la figure 1 comprend une filière 1, alimentée en verre fondu soit depuis l'avant-corps d'un four qui achemine directement le verre depuis son sommet, soit par une trémie contenant du verre froid, par exemple sous forme de billes qui tombent par gravité.

La filière 1, quel que soit le type d'alimentation, est généralement en alliage platine-rhodium et elle est chauffée par effet Joule de manière à maintenir le verre à une température élevée ou à le refondre selon le cas. De la filière 1 s'écoule une multitude de filets de verre fondu qui sont étirés sous la forme d'un faisceau 2 par un dispositif (non représenté) permettant également de former la bobine 3. Sur le trajet du faisceau 2, un rouleau enducteur 4, par exemple en graphite, dépose sur les filaments de verre une composition d'ensimage destinée à prévenir ou limiter les frottements des filaments sur les différents organes avec lesquels ils entrent en contact. L'ensimage peut être tout ensimage connu aqueux ou anhydre (moins de 5 % d'eau) et il peut contenir des composés qui entrent dans la constitution des filaments thermoplastiques 5 venant s'associer aux filaments de verre pour former le fil composite 6.

A partir de la tête de filage 7 représentée schématiquement sont extrudés les filaments thermoplastiques 5. La tête de filage est alimentée par la matière principale fondue issue de l'extrudeuse 8 (non représentée) alimentée par des granulés et par la matière secondaire, également fondue, comprenant le mélange d'une matière organique thermoplastique fondue et d'un composé non filable, issue de l'extrudeuse 9 (non représentée) alimentée par des granulés de matière organique thermoplastique et de la poudre d'un composé non filable.

Les matières thermoplastiques principale et secondaire s'écoulent sous pression dans la filière et sont extrudées à travers les multiples orifices d'une plaque-filière en filaments 5 qui sont immédiatement étirés. Dès leur formation, les filaments 5 sont refroidis par un dispositif de soufflage 10 alimenté par un fluide gazeux. Les filaments passent ensuite sur un rouleau 11 qui permet d'une part de les rassembler sous la forme d'une nappe 12 et d'autre part de dévier leur trajectoire. La nappe 12 est ensuite dirigée vers l'étireur à tambours 13 qui est ici constitué de six tambours 14, 15, 16, 17, 18 et 19.

Les tambours 14, 15, 16, 17, 18 et 19 ont des vitesses différentes, de sorte qu'ils créent une accélération dans le sens du défilement de la nappe 12. Les tambours fonctionnent ici par paire : aux tambours 14, 15 formant la première paire est associé un dispositif de chauffage, par exemple électrique (non représenté), qui permet par contact d'accroître la température des fils thermoplastiques d'une manière homogène et rapide. L'élévation de la température dépend de la nature des matières thermoplastiques utilisées. Les tambours 14, 15 sont animés d'une vitesse identique qui permet l'étirage des filaments thermoplastiques 5 depuis la tête de filage 7.

La deuxième paire de tambours 16, 17 est animée d'une vitesse supérieure à celle de la première paire. La nappe 12 des filaments thermoplastiques chauffés par passage sur la première paire de tambours 14, 15 subit une accélération due à la différence de vitesse des deux paires de tambours, accélération qui se traduit par une élongation des filaments de la nappe 12 et une modification de leur structure.

La dernière paire de tambours 18, 19 est animée d'une vitesse identique ou supérieure à celle de la paire précédente et comporte un dispositif de refroidissement (non représenté), par exemple du type " water-jacket ", qui permet de figer la structure des filaments de la nappe 12.

Le chauffage et le refroidissement de la nappe 12 de filaments thermoplastiques sont effectués rapidement et de façon homogène.

L'étireur 13 peut comprendre un nombre plus élevé de tambours, à condition que soient respectées les trois zones précitées : chauffage, étirage et refroidissement. Par ailleurs, chacune de ces zones peut n'être constituée que d'un seul tambour. L'étireur peut être également constitué d'une succession de groupes constitués par les trois zones qui viennent d'être citées.

La nappe 12 de filaments thermoplastiques passe ensuite sur un rouleau de déviation 20 et au travers d'un système Venturi 21 qui maintient les filaments thermoplastiques individualisés et assure leur projection dans la nappe de filaments de verre 22 venant du faisceau 2. Le dispositif 21 fonctionne par un apport d'air comprimé et il ne communique aucune vitesse supplémentaire à la nappe 12, ce qui limite le risque de perturbation desdits filaments de verre.

La jonction de la nappe 12 de filaments thermoplastiques et de la nappe de filaments de verre 22 a lieu entre le rouleau enducteur 4 et le dispositif 23 d'assemblage du fil composite. Cette disposition permet de bien adapter la géométrie de la nappe de verre et procure une répartition homogène des deux types de filaments. Un déflecteur 24 muni d'encoches assure le maintien, en particulier sur les bords, des filaments et permet d'atténuer la perturbation subie par la nappe de verre 22 au moment de la projection de la nappe 12 de filaments thermoplastiques.

La nappe 25 de filaments de verre et de thermoplastique entremêlés est assemblée au niveau du dispositif 23 en un fil, lequel fil est immédiatement enroulé sous la forme de la bobine 3 grâce au dispositif d'étirage, non représenté, qui fonctionne à une vitesse linéaire donnée maintenue constante pour garantir la masse linéique désirée.

Cette vitesse linéaire qui permet l'étirage des filaments de verre est ici identique à celle que communiquent les tambours 18, 19 à la nappe 12 des filaments thermoplastiques. De cette façon, les filaments thermoplastiques ont la même vitesse lors du mélange et le fil composite ne présente pas d'ondulation lors de sa formation.

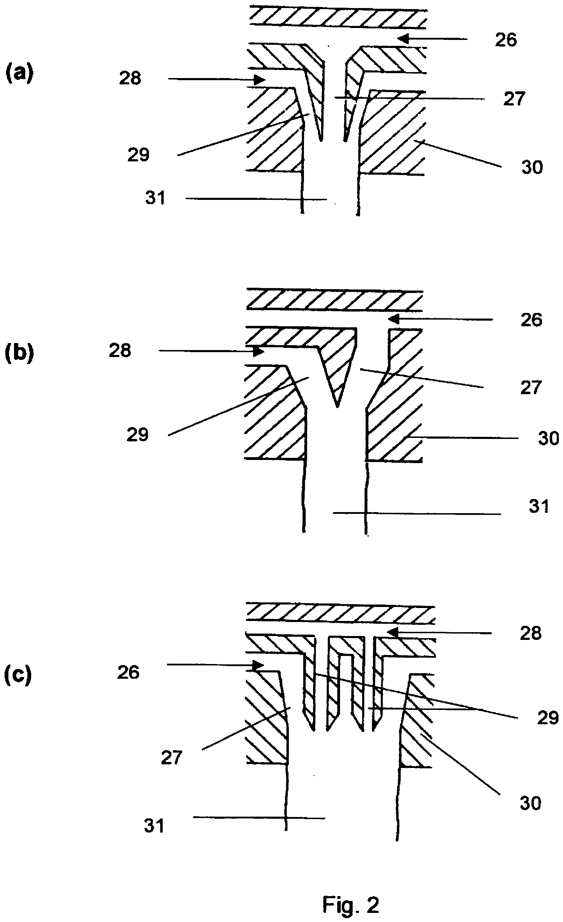

La figure 2 a-c est une vue schématique en coupe longitudinale de la tête de filage illustrée schématiquement à la figure 1, au niveau d'un orifice de co-extrusion pour différents modes de réalisation.

Dans la figure 2a, la matière principale fondue 26 venant d'une extrudeuse (non représentée) acheminée par le canal 27 et la matière secondaire également fondue 28 venant d'une autre extrudeuse (non représentée) acheminée par le canal 29 convergent vers l'orifice de la plaque-filière 30. Sous l'effet de la pression, les matières principale et secondaire sont co-extrudées pour former le filament 31. Dans ce filament, la matière principale occupe le centre et la matière secondaire est répartie à la périphérie comme indiqué dans la figure 3b.

La figure 2b illustre un deuxième mode de réalisation permettant d'obtenir un filament 31 dans lequel la matière principale 26 et la matière secondaire 28 ont la distribution illustrée dans la figure 3d.

La figure 2c illustre un troisième mode de réalisation permettant l'obtention d'un filament 31 dans lequel la matière secondaire 28 est incluse dans la matière principale 26 conformément à la figure 3e.

Dans la figure 3 sont représentées schématiquement des coupes transversales de filaments thermoplastiques préférés tels qu'obtenus à la sortie de la tête de filage.

La matière principale 26 (en sombre) et la matière secondaire 28 (en clair) sont réparties dans le filament de différentes manières.

Dans le filament de la figure 3 a-c, la matière principale occupe le centre et la matière secondaire se trouve en périphérie selon une répartition du type en quartiers d'orange (Fig. 3a) ou coeur-peau co-axiaux (Fig. 3b) ou non (Fig. 3c).

Dans les filaments de la figure 3 d, les matières principale et secondaire sont juxtaposées selon un arrangement du type côte à côte.

Dans le filament de la figure 3e, la matière secondaire est incluse dans la matière principale sous forme îles-mer.

### EXEMPLES

On réalise un fil composite dans l'installation décrite dans la Figure 1 comprenant la tête de filage par co-extrusion de la Figure 2a.

Le fil est constitué de 1600 filaments de verre E de 18,5 µm de diamètre et 1600 filaments thermoplastiques obtenus par co-extrusion de polypropylène et d'un mélange de polypropylène et de noir de carbone. Le fil composite contient 75 % en poids de verre, 24,4 % de polypropylène et 0,6 % de noir de carbone. Le fil présente une coloration noire intense qui autorise la réalisation de pièces composites, notamment par moulage, satisfaisant aux conditions de couleur imposées par les constructeurs automobiles.

A titre de comparaison, on réalise un fil composite dans les mêmes conditions que précédemment modifiées en ce que l'on a remplacé la tête de filage par co-extrusion par une tête de filage « monocomposant » alimentée par une seule extrudeuse contenant du polypropylène et du noir de carbone. Le fil obtenu renferme 0,6 % (référence A) et 0,2 % (référence B) en poids de noir de carbone.

A partir du fil composite obtenu, on réalise une pièce moulée dans les conditions suivantes :

Les fils composites provenant de 6 enroulements sont rassemblés, puis ils passent dans un four à 220°C puis dans une filière chauffée à une température identique pour former un jonc qui est ensuite refroidi par pulvérisation d'eau à la température ambiante (20°C) et coupé à une longueur de 12 mm pour former des granulés. Ces granulés sont introduits dans une presse pour former une pièce moulée.

Le tableau suivant rassemble les caractéristiques des fils composites et des pièces moulées à partir de ces fils.

| | Fil composite | | | | Pièce moulée |
|---|---|---|---|---|---|
| | Verre (%) | Thermoplastique (%) | Noir de carbone (%) | Aptitude au filage | Couleur |
| Exemple | 75 | 24.4 | 0.6 | Bonne | Noire |
| Référence A | 75 | 24.4 | 0.6 | Mauvaise | Noire |
| Référence B | 75 | 24.8 | 0.2 | Bonne | Grise |

A quantité de noir de carbone identique, l'invention permet d'obtenir un fil composite ayant une meilleure aptitude au filage que celui de la Référence A, ce dernier donnant lieu à de nombreuses casses et un temps de fibrage effectif du fil composite qui n'excède pas 50 %. Les conditions de fibrage de la Référence A ne sont pas acceptables sur un plan industriel.

Le fil composite de la Référence B présente quant à lui une bonne aptitude au filage du fait de la réduction de la quantité de noir de carbone mais qui est obtenue au détriment de la couleur de la pièce moulée.

## Revendications

1. Procédé de fabrication d'un fil composite formé par l'association de filaments continus de verre issus d'une filière et de filaments continus de matière thermoplastique issus d'au moins une tête de filage, étirés et co-mêlés sous la forme d'une nappe à un faisceau ou une nappe de filaments de verre, **caractérisé en ce que** les filaments thermoplastiques sont obtenus par co-extrusion d'une matière organique thermoplastique majoritaire (matière principale) et d'une matière organique thermoplastique minoritaire contenant au moins un composé non filable (matière secondaire).

2. Procédé selon la revendication 1, **caractérisé en ce que** la co-extrusion est effectuée de telle sorte que la matière secondaire est répartie à la surface de la matière principale servant d'âme.

3. Procédé selon la revendication 1, **caractérisé en ce que** la co-extrusion est réalisée de telle que la matière secondaire est incluse dans la matière principale.

4. Procédé selon l'une des revendications 1 à 3, **caractérisé en ce que** la matière principale et la matière organique thermoplastique minoritaire sont choisies parmi les polyoléfines telles que le polyéthylène et le polypropylène, les polyesters tels que le polyéthylène téréphtalate et le polybutylène téréphtalate, les polyamides tels que le polyamide-6, le polyamide-6,6 et le polyamide-12, le polysulfure de phénylène et les polyuréthanes.

5. Procédé selon l'une des revendications 1 à 4, **caractérisé en ce que** le flux de la matière principale représente au moins 50 %, de préférence 70 à 95 % en poids de l'ensemble des matières entrant dans la tête de filage.

6. Procédé selon l'une des revendications 1 à 5, **caractérisé en ce que** la teneur pondérale en composé(s) non filable(s) dans la matière secondaire est inférieure à 80 % et de préférence varie de 1 à 50 % et mieux encore varie de 10 à 30 %.

7. Dispositif pour la fabrication d'un fil composite formé par l'association de filaments continus de verre et de filaments continus de matière organique thermoplastique comprenant d'une part au moins une filière alimentée en verre fondu, dont la face inférieure comporte une multitude d'orifices, associée à un dispositif enducteur, et d'autre part au moins une tête de filage alimentée sous pression en matière organique thermoplastique fondue, comportant une multitude d'orifices, des moyens d'étirage et de projection des filaments thermoplastiques en vue de les mêler aux filaments de verre et des moyens communs à la filière et à la tête de filage permettant l'assemblage et éventuellement le bobinage du fil composite, **caractérisé en ce que** la tête de filage est adaptée à la co-extrusion d'une matière principale et d'une matière secondaire contenant au moins un composé non filable.

8. Dispositif selon la revendication 7, **caractérisé en ce que** la tête de filage a une géométrie interne permettant la distribution séparée de la matière principale et de la matière secondaire jusqu'à la plaque-filière.

9. Fil composite obtenu par le procédé selon l'une des revendications 1 à 6, ledit fil comprenant des filaments thermoplastiques contenant au moins un composé non filable.

10. Produit, notamment sous forme de mat, de tissu, de tricot ou de tresse, contenant au moins un fil selon la revendication 9.

11. Matériau composite à matrice thermoplastique renforcée par des fils de verre obtenu à partir du fil selon la revendication 9.

## Claims

1. A process for manufacturing a composite strand formed by combining continuous glass filaments emanating from a bushing with continuous thermoplastic filaments emanating from at least one spinning head, these filaments being drawn and commingled in the form of a web into a bundle or web of glass filaments, **characterized in that** the thermoplastic filaments are obtained by coextruding an organic thermoplastic in a major amount (called the main material) with an organic thermoplastic present in a minor amount and containing at least one nonspinable compound (called the secondary material).

2. The process as claimed in claim 1, **characterized in that** the coextrusion is carried out in such a way that the secondary material is distributed on the surface of the main material, which serves as a core.

3. The process as claimed in claim 1, **characterized in that** the coextrusion is carried out in such a way that the secondary material is included within the main material.

4. The process as claimed in one of claims 1 to 3, **characterized in that** the main material and the secondary organic thermoplastic are chosen from polyolefins such as polyethylene and polypropylene, polyesters such as polyethylene terephthalate and polybutylene terephthalate, polyamides such as nylon-6, nylon-6,6 and nylon-12, polyphenylene sulfide and polyurethanes.

5. The process as claimed in one of claims 1 to 4, **characterized in that** the stream of the main material represents at least 50%, preferably 70 to 95%, by weight of all of the materials entering the spinning head.

6. The process as claimed in one of claims 1 to 5, **characterized in that** the weight content of nonspinable compound(s) in the secondary material is less than 80% and preferably varies from 1 to 50% and better still varies from 10 to 30%.

7. A device for manufacturing a composite strand formed by combining continuous glass filaments with continuous organic thermoplastic filaments, which device comprises, on the one hand, at least one bushing supplied with molten glass, the lower face of which has a very large number of holes and is associated with a coating device, and, on the other hand, at least one spinning head supplied under pressure with molten organic thermoplastic, which includes a very large number of holes, and means for drawing and spraying the thermoplastic filaments for the purpose of mingling them with glass filaments and means common to the bushing and to the spinning head for assembling and optionally winding the composite strand, **characterized in that** the spinning head is suitable for coextruding a main material with a secondary material containing at least one nonspinable compound.

8. The device as claimed in claim 7, **characterized in that** the spinning head has an internal geometry allowing the main material and the secondary material to be delivered separately right to the spinneret plate.

9. A composite strand obtained by the process as claimed in one of claims 1 to 6, the said strand comprising thermoplastic filaments containing at least one nonspinable compound.

10. A product, especially in the form of a mat, woven, knit or braid, containing at least one strand as claimed in claim 9.

11. A composite having a thermoplastic matrix reinforced by glass strands obtained from the strand as claimed in claim 9.

## Patentansprüche

1. Verfahren zur Herstellung eines Verbundfadens, der durch Verbinden von Endlosglasfilamenten, die aus einer Spinndüse kommen, und Endlosfilamenten aus Thermoplastmaterial, die aus wenigstens einem Spinnkopf kommen, gestreckt werden und in Form einer Lage mit einem Strang oder einer Lage aus Glasfilamenten vermengt werden, gebildet wird, **dadurch gekennzeichnet, daß** die Thermoplastfilamente durch Coextrusion eines mehrheitlich vorliegenden organischen Thermoplastmaterials (Hauptmaterial) und eines in Minderheit vorliegenden organischen Thermoplastmaterials, das wenigstens eine nicht verspinnbare Verbindung enthält (Nebenmaterial), erhalten werden.

2. Verfahren nach Anspruch 1, **dadurch gekennzeichnet, daß** die Coextrusion derart vollzogen wird, daß das Nebenmaterial auf der Oberfläche des als Kern dienenden Hauptmaterials verteilt wird.

3. Verfahren nach Anspruch 1, **dadurch gekennzeichnet, daß** die Coextrusion derart vollzogen wird, daß das Nebenmaterial in das Hauptmaterial eingeschlossen wird.

4. Verfahren nach einem der Ansprüche 1 bis 3, **dadurch gekennzeichnet, daß** das Hauptmaterial und das in Minderheit vorliegende organische Thermoplastmaterial aus den Polyolefinen, wie Polyethylen und Polypropylen, den Polyestern, wie Polyethylenterephthalat und Polybutylenterephthalat, den Polyamiden, wie Polyamid-6, Polyamid-6,6 und Polyamid-12, Polyphenylensulfid und den Polyurethanen ausgewählt sind.

5. Verfahren nach einem der Ansprüche 1 bis 4, **dadurch gekennzeichnet, daß** der Strom des Hauptmaterials wenigstens 50 Gew.-%, vorzugsweise 70 bis 95 Gew.-% aller in den Spinnkopf gelangenden Materialien ausmacht.

6. Verfahren nach einem der Ansprüche 1 bis 5, **dadurch gekennzeichnet, daß** der Gewichtsgehalt an nicht verspinnbarer (verspinnbaren) Verbindung(en) in dem Nebenmaterial unter 80 % liegt und vorzugweise zwischen 1 und 50 % und besser noch zwischen 10 und 30 % variiert.

7. Vorrichtung für die Herstellung eines Verbundfadens, der durch Verbinden von Endlosglasfilamenten und Endlosfilamenten aus organischem Thermoplastmaterial gebildet wird, umfassend einerseits wenigstens eine mit geschmolzenem Glas beaufschlagte, einer Beschichtungsvorrichtung zugeordnete Spinndüse, deren Unterseite eine Vielzahl von Öffnungen aufweist, und andererseits wenigstens einen unter Druck mit geschmolzenem organischen Thermoplastmaterial beaufschlagten Spinnkopf, der eine Vielzahl von Öffnungen, Mittel zum Strecken und Aufschleudern der Thermoplastfilamente, um sie mit den Glasfilamenten zu vermengen, umfaßt, und wobei Mittel, die der Spinndüse und dem Spinnkopf gemein sind, das Verbinden und eventuell das Aufspulen des Verbundfadens ermöglichen, **dadurch gekennzeichnet, daß** der Spinnkopf für die Coextrusion eines Hauptmaterials und eines Nebenmaterials, das wenigstens eine nicht verspinnbare Verbindung enthält, geeignet ist.

8. Vorrichtung nach Anspruch 7, **dadurch gekennzeichnet, daß** der Spinnkopf eine innere Geometrie aufweist, die das getrennte Ausgeben des Hauptmaterials und des Nebenmaterials bis zur Spinndüsenplatte ermöglicht.

9. Verbundfaden, der mittels des Verfahrens nach einem der Ansprüche 1 bis 6 erhalten wird, wobei der Faden Thermoplastfilamente, die wenigstens eine nicht verspinnbare Verbindung enthalten, umfaßt.

10. Produkt, insbesondere in Form einer Matte, eines Gewebes, eines Gestricks oder eines Geflechts, das wenigstens einen Faden nach Anspruch 9 enthält.

11. Verbundmaterial mit durch Glasfäden verstärkter Thermoplastmatrix, das mittels des Fadens nach Anspruch 9 erhalten wird.
